# EUROPÄISCHE PATENTANMELDUNG

(11) **EP 1 243 398 A1**
(43) Veröffentlichungstag der Anmeldung: **25.09.2002**
(21) Anmeldenummer: 02006136.2
(22) Anmeldetag: 19.03.2002
(51) Int. Cl.: B29C 45/33

(54) **Werkzeug zur Herstellung und Entformung von Formteilen, insbesondere Kunststoff-Formteilen**

(30) Priorität: 20.03.2001 DE 10113327
(71) Anmelder: Breuer, Hans Werner, 4447 Känerkinden (CH)
(72) Erfinder: Breuer, Hans Werner, 4447 Känerkinden (CH)
(74) Vertreter: Ebert, Jutta

(57) **Zusammenfassung**

Bei einem Werkzeug zur Herstellung und Entformung von Formteilen (9), insbesondere Kunststoff-Formteilen, die in ihrem äusseren Bereich hinterfangen sind, wird die Guss- oder Spritzgussform von den Innenflächen (12) von Schiebern (1) gebildet.

Die Schieber sind nach der Erfindung als Schrägschieber (1) ausgebildet, deren Bewegung zur Entformung in Achsrichtung erfolgt und dabei gleichzeitig eine seitwärts gerichtete Komponente nach schräg außen aufweist. Die Rückseiten (13) der Schrägschieber (1) sind zur Mittelachse (10) konisch ausgebildet und können zur Entformung an entsprechend konisch ausgebildeten Führungsflächen (15) in Führungsnuten (14') gleiten.

## Beschreibung

Die Erfindung betrifft ein Werkzeug zur Herstellung und Entformung von Formteilen, insbesondere Kunststoff-Formteilen, die in ihrem äußeren Bereich hinterfangen sind, wobei die Guss- oder Spritzgussform von den Innenflächen von Schiebern gebildet wird.

Formteile aus Kunststoff, die mit einer sogenannten Hinterfangung versehen sind, wie Kappen, Stopfen und dergleichen, werden nach dem Stand der Technik entweder mit sogenannten horizontal wirkenden Schiebern bzw. Backen oder mit Spreizhülsen entformt.

### Dies hat verschiedene Nachteile:

Bei Schieber- oder Backenwerkzeugen ist ein relativ großer Platzbedarf vonnöten, da die Schieber mittels schräg gelagerten Führungsbolzen die seitliche Bewegung bewerkstelligen. Außerdem bedarf es mehrerer Formteile für eine Formeinheit oder Kavität, wie Schieber, Führungsleisten, Backenschließplatte, Schrägbolzen, Druckplatte und weiteren Zubehörs, wie z.B. Schrauben und Zylinderstifte. Im Spreizhülsenbereich müssen zwar weniger Formteile eingesetzt werden, jedoch ist die sogenannte Spreizhülse oder Spannzange durch ihre ständig wechselnden Biegebeanspruchungen einer hohen Materialermüdung ausgesetzt und bedarf außerdem einer kontinuierlichen Reinigung. Hinzu kommt, dass der Herstellungsprozess mit Hilfe von Spreizhülsen aufwendiger ist, als mit den vorgenannten Werkzeugen und sie bei einem Defekt komplett ersetzt werden müssen, also nicht segmentweise ausgetauscht werden können, da sie aus einem Stück bestehen.

All dies wirkt sich entsprechend ungünstig auf die Wirtschaftlichkeit aus.

Aufgabe der Erfindung ist es, ein Werkzeug zur Herstellung und Entformung von Kunststoffteilen mit Hinterfangungen vorzuschlagen, das nicht den grossen Platzbedarf der bekannten Schieber- oder Backenwerkzeuge hat und das gleichzeitig weniger verschleißanfällig ist, als die bekannten Spreizhülsen.

Erfindungsgemäss wird dies dadurch erreicht, dass die Schieber als Schrägschieber ausgebildet sind, deren Bewegung zur Entformung in Achsrichtung erfolgt und dabei gleichzeitig eine seitwärts gerichtete Komponente nach schräg außen aufweist. Diese axiale Bewegung der Schrägschieber genügt um die Formteile freizustellen. Dabei beanspruchen de Schrägschieber deutlich weniger Platz als die bekannten, horizontal zu bewegenden Schieber oder die bekannten Spreizhülsen.

Es ist von Vorteil, wenn die Bewegung der Schrägschieber in Achsrichtung durch Anschläge begrenzt ist.

Nach einer bevorzugten Ausführungsform der Erfindung verlaufen die von der Mittelachse des Werkzeugs abgewandten Rückseiten der Schrägschieber konisch zur Mittelachse und können an in der Kavität entsprechend konisch ausgebildeten Führungsflächen in Achsrichtung gleiten; so ist eine Bewegung der Schrägschieber in Achsrichtung aus der Kavität heraus immer auch mit einer Auswärtsbewegung verbunden.

Vorzugsweise weisen die Schrägschieber an ihrer der Mittelachse des Werkzeugs abgewandten Rückseite jeweils einen Führungsfortsatz auf, und diese Führungsfortsätze stehen mit entsprechenden Führungsnuten der Führungsflächen in gleitendem Eingriff.

Die Schrägschieber können vorteilhaft in der oberen Hälfte ihrer Rückseiten Ausnehmungen aufweisen, deren untere Begrenzung den Anschlag für im oberen Bereich der Führungsflächen angeordnete Gegenanschläge bildet.

Vorzugsweise sind die Führungsflächen an Einsätzen ausgebildet, die in Ausnehmungen einer Auswerferplatte mittels Schrauben und als Gegenanschläge dienenden Scheiben befestigt sind.

Am konisch zulaufenden Ende der Führungsnuten ist vorteilhaft ein Federelement vorgesehen; dies können z.B. ein in eine Ringnut eingelegter Federring oder sogenannte federnde Druckstücke sein. Durch ein solches Federelement wird die Einwärtsbewegung der Schrägschieber gedämpft und die Formschlüssigkeit der Schrägschieber zur Bildung der Gussform wird sichergestellt.

Beim Formenschluss werden sonach die Schrägschieber kurz vor ihrer Ausgangsposition etwas gefedert abgefangen, um so wieder eine optimale Planität in der Formtrennungsebene zu gewährleisten.

Die Erfindung wird im folgenden anhand der anhängenden Zeichnungen beispielhaft beschrieben. Es zeigen:
- Fig. 1: einen Schnitt durch eine erste Ausführungsform des erfindungsgemäßen Schrägschieber-Werkzeugs,
- Fig. 2: eine Draufsicht auf das Schrägschieber-Werkzeug gemäß Fig. 1,
- Fig. 3: einen Schnitt durch eine andere Ausführungsform des erfindungsgemäßen Schrägschieber-Werkzeugs, und zwar die Werkzeug-Düsenseite und
- Fig. 4: einen entlang der Mittelachse geteilten Schnitt durch das Schrägschieber-Werkzeug gemäß Fig. 1, wobei in der linken Hälfte seine geschlossene und in der rechten Hälfte seine geöffnete Position wiedergegeben ist.

Die Figuren zeigen jeweils einen Teil eines Werkzeugs zur Herstellung eines Formteils 9, hier einer Verschlusskappe 9a mit anhängendem Garantiering 9b, und zwar den unteren Werkzeugteil, welcher der Formung der Hinterfangung 9c dient, an welcher der Garantiering 9b abgesetzt ist.

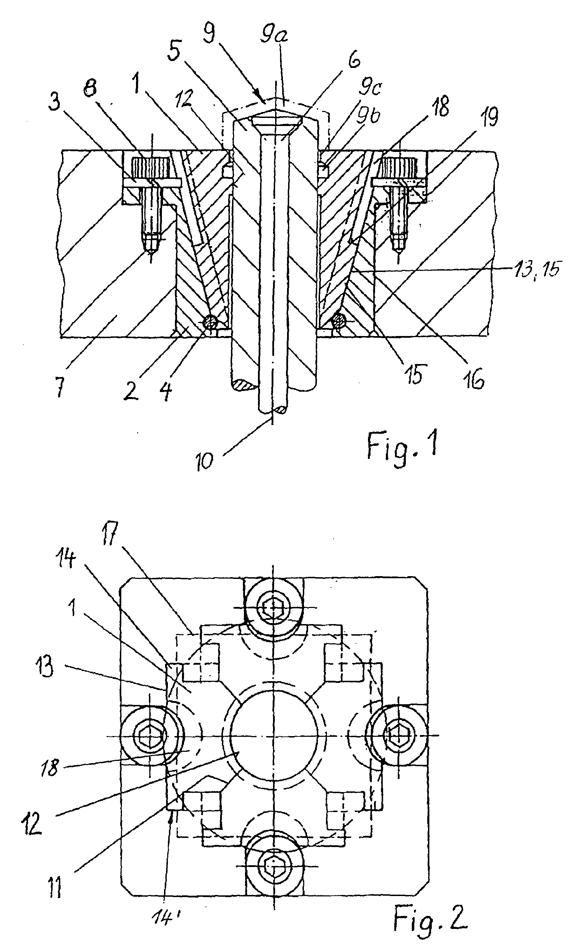

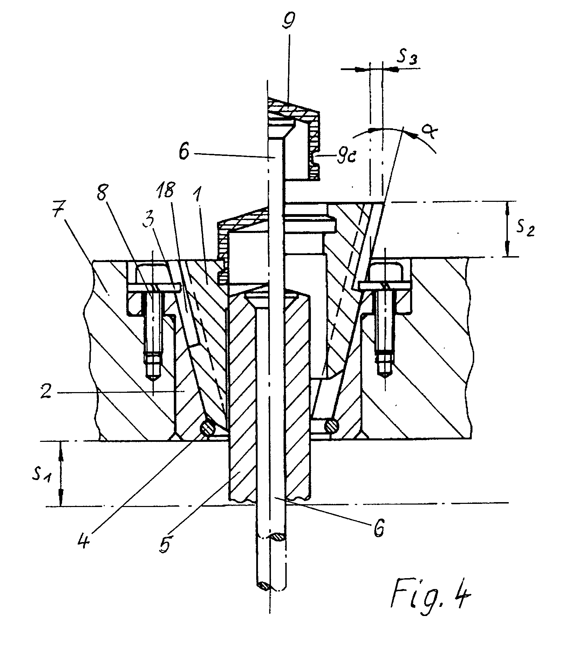

Das in den Fig. 1 und 2 gezeigte Werkzeugteil besitzt vier Schieber 1, die paarweise in Bezug auf die Achse 10 des herzustellenden Formteils 9 einander gegenüber angeordnet sind. In der gezeigten Position, in der sich die Grant Seitenflächen 11 benachbarter Schieber 1 berühren, bilden ihre der Achse 10 zugewandten Innenflächen 12 die Form für das herzustellende Kunststoff-Formteil 9. Ihre der Achse 10 abgewandten Rückseiten 13 verlaufen in einem spitzen Winkel α (siehe auch Fig. 4) von ca. 10° zur Achse 10 bzw. zu ihren Innenflächen 12 nach oben auswärts gerichtet. Dieser Winkel ist nicht kritisch und kann ohne weiteres zwischen 7° und 20° liegen. Bei noch größerem Winkel werden allerdings die Radialkräfte zu groß. Bei kleineren Winkeln werden die Schieber 1 selbsthemmend.

Die Rückseiten 13 der Schieber 1 sind mit je einem Führungsfortsatz 14 mit im wesentlichen T-förmigem oder schwalbenschwanzförmigem Querschnitt versehen. Mit diesen Führungsfortsätzen 14 gleiten sie in entsprechenden Führungsnuten 14' von Einsätzen 2, deren der Achse 10 zugewandte Führungsflächen 15 dieselbe Neigung zur Achse 10 aufweisen, wie die Rückseiten der Schieber 1. Die von der Achse 10 abgewandten Flächen 16 der Einsätze 2 sind entweder, wie in Fig. 1 gezeigt, eben oder gemäss Fig. 2 zylindrisch. Die Anordnung aus Schrägschiebern 1 und Einsätzen 2 befindet sich in einer entsprechenden kubischen oder zylindrischen Ausnehmung 17 einer Auswerferplatte 7. An dieser Auswerferplatte 7 sind die Einsätze 2 mit Schrauben 8 und als Anschlag dienenden Scheiben 3 befestigt. In ihrer oberen Hälfte weisen die Rückseiten 13 der Schrägschieber 1 zu den Schrauben 8 konzentrische Ausnehmungen 18 auf, deren untere Begrenzung 19 bei der Aufwärtsbewegung den Anschlag der Schrägschieber 1 an den Anschlagscheiben 3 bildet.

Mit ihren Führungsfortsätzen 14 können die Schrägschieber 1 in den entsprechenden Führungsnuten 14' der Einsätze 2 in Achsrichtung gleiten, jedoch nicht achsparallel, vielmehr ist die Bewegung nach oben mit einer gleichzeitigen, durch die Führungsnuten 14' der Einsätze 2 bzw. die Neigung ihrer Innenflächen 15 wie der Rückseiten 13 der Schrägschieber 1 erzwungenen Auswärtsbewegung verbunden.

Im Inneren der durch die Schrägschieber 1 gebildeten Form befindet sich ein Stempel 5 zur Formung der Innenseite des Kunststoff-Formteils 9, und konzentrisch im Stempel 5 ist ein Zentralausstoßer 6 zum Ausstoßen des fertigen Kunststoff-Formteils 9 nach der Entformung seiner Aussenflächen vorgesehen.

Der Vorgang der Entformung ist in Fig. 4 deutlicher dargestellt und vollzieht sich wie folgt: Nach dem Füllvorgang kann zunächst der obere Teil des Werkzeugs (nicht dargestellt) entfernt werden, der den oberen Teil des Formteils 9, im Beispiel der Verschlusskappe 9a, formt und der wegen des Fehlens einer Hinterfangung einfach nach oben abgestreift werden kann. Danach wird mit dem Stempel 5 und dem Zentralausstoßer 6 das Formteil 9 nach oben gestoßen. Wegen der Hinterfangung 9c nimmt das Formteil 9 (im Beispiel die Verschlusskappe 9a samt Garantiering 9b) die Schrägschieber 1 um den Weg s₂ bis zum Anschlag der Begrenzung 19 an der Scheibe 3 mit nach oben. Während dieser Aufwärtsbewegung laufen die Schrägschieber 1 zwangsweise um s₃ nach außen und geben die Verschlusskappe 9a samt anhängendem Garantiering 9b frei. Danach kann sie durch den Zentralausstoßer 6 vom Stempel 5 abgeschoben werden.

Vorzugsweise befindet sich am unteren Ende der Führungsnuten 14' in den Einsätzen 2 eine Ringnut, in der ein Federring 4 oder ein anderes Federelement angeordnet ist. Dieser Federring 4 dient der Dämpfung der Schrägschieber 1 in der letzten Phase ihrer Abwärtsbewegung, um die Herstellung der Formschlüssigkeit der Schrägschieber 1 sicherzustellen.

Neben der hier beschriebenen Ausführungsform sind diverse Abwandlungen im Rahmen der Erfindung möglich. So sind beispielsweise statt vier Schrägschiebern 1 auch deren drei, sechs, acht oder mehr möglich. Da aber aus Kostengründen grundsätzlich die Zahl von Einzelteilen klein gehalten werden sollte, sind drei oder vier Schrägschieber 1 bevorzugt.

Anstelle der Anschlagscheiben 3 unter den Schrauben 8 sind auch andere Formen von Anschlägen möglich. Die Wahl der Anschlagsform ist beliebig.

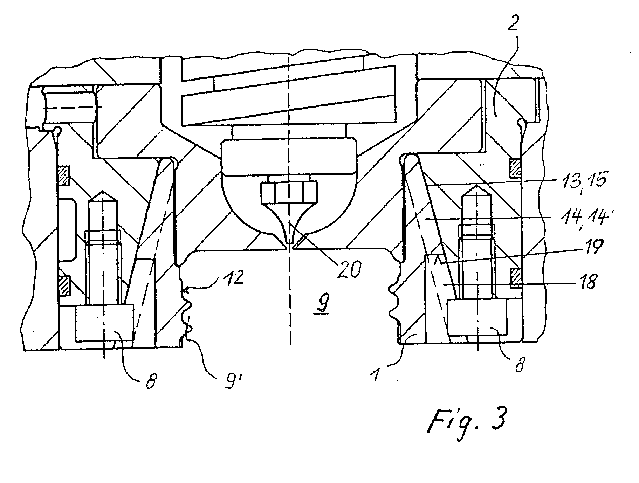

Fig. 3 zeigt eine andere Ausführungsform des Werkzeugs, und zwar die Werkzeug-Düsenseite. Auch hier sind die Schrägschieber 1 mittels Schrauben 8 in Einsätzen 2 befestigt und die konisch ausgebildeten Rückseiten 13 der Schrägschieber 1 können bei deren Bewegung in Achsrichtung an entsprechend konisch ausgebildeten Führungsflächen 15 der Einsätze 2 gleiten. Die Innenflächen 12 der Schrägschieber 1 bilden die Form für das Formteil 9, das hier eine Schraubverschlusskappe ist, die durch ihr Gewinde 9' hinterfangen ist. Von oben kann die Düse 20 des Werkzeugs in die Kavität eingesenkt werden, um den Kunststoff für die Herstellung des Formteils 9 in die Form einbringen zu können. Die Bewegung der Schrägschieber 1 zur Entformung erfolgt hier in Achsrichtung nach unten mit einer wiederum durch den konischen Verlauf der Rückseiten 13 und der Führungsflächen 15 erzwungenen und nach außen gerichteten Komponente bis zum Anschlag der Begrenzungen 19 der Ausnehmungen 18 an den Schrauben 8.

Ein wesentlicher Vorteil der Erfindung liegt auch darin, dass die einzelnen Schrägschieber 1 identisch gestaltet sind und so bei Verschleiß einzeln ausgewechselt werden können. Dadurch ergeben sich praktisch keine Standzeiten des Werkzeugs.

Ein weiterer Vorteil besteht darin, dass das erfindungsgemäße Werkzeug weniger Platz beansprucht als herkömmliche Werkzeuge. Dadurch kann die Anzahl von Kavitäten von bisher 32 auf 36 auf derselben Fläche erhöht werden.

Selbstverständlich können auch Kunststoffteile oder nach dem Metallpulver-Spritzgiessverfahren hergestellte Teile, die im gesamten äußeren Bereich hinterfangen sind, auf diese Weise entformt werden.

Auch die Geschwindigkeit der Produktion kann mit der vorliegenden Erfindung um mehr als 10% gesteigert werden.

## Patentansprüche

1. Werkzeug zur Herstellung und Entformung von Formteilen, insbesondere Kunststoff-Formteilen, die in ihrem äußeren Bereich hinterfangen sind, wobei die Guss- oder Spritzgussform von den Innenflächen von Schiebern gebildet wird,
**dadurch gekennzeichnet,**
**dass** die Schieber als Schrägschieber (1) ausgebildet sind, deren Bewegung zur Entformung in Achsrichtung erfolgt und dabei gleichzeitig eine seitwärts gerichtete Komponente nach schräg außen aufweist.

2. Werkzeug nach Anspruch 1, **dadurch gekennzeichnet, dass** die Bewegung der Schrägschieber (1) in Achsrichtung durch Anschläge (3, 19) begrenzt ist.

3. Werkzeug nach Anspruch 1, **dadurch gekennzeichnet, dass** die von der Mittelachse (10) des Werkzeugs abgewandten Rückseiten (13) der Schrägschieber (1) konisch zur Mittelachse(10) verlaufen und an in der Kavität entsprechend konisch ausgebildeten Führungsflächen (15) in Achsrichtung gleitend geführt sind und eine Bewegung der Schrägschieber (1) in Achsrichtung aus der Kavität heraus immer auch mit einer Auswärtsbewegung verbunden ist.

4. Werkzeug nach Anspruch 2, **dadurch gekennzeichnet, dass** die Schrägschieber (1) an ihrer der Mittelachse (10) des Werkzeugs abgewandten Rückseite (13) jeweils einen Führungsfortsatz (14) aufweisen und diese Führungsfortsätze (14) mit entsprechenden Führungsnuten (14') der Führungsflächen (15) in gleitendem Eingriff stehen.

5. Werkzeug nach Anspruch 3, **dadurch gekennzeichnet, dass** die Schrägschieber (1) in der oberen Hälfte ihrer Rückseiten (13) Ausnehmungen (18) aufweisen, deren untere Begrenzung (19) den Anschlag für im oberen Bereich der Führungsflächen (15) angeordnete Gegenanschläge (3) bildet.

6. Werkzeug nach Anspruch 5, **dadurch gekennzeichnet, dass** die Führungsflächen (15) an Einsätzen (2) ausgebildet sind, die in Ausnehmungen (17) einer Auswerferplatte (7) mittels Schrauben (8) und als Gegenanschläge (3) dienenden Scheiben (3) befestigt sind.

7. Werkzeug nach Anspruch 4, **dadurch gekennzeichnet, dass** am unteren Ende der Führungsnuten (14') ein Federelement (4) vorgesehen ist.

8. Werkzeug nach Anspruch 4, **dadurch gekennzeichnet, dass** am unteren Ende der Führungsnuten (14') ein Federring (4) oder federnde Druckstücke vorgesehen sind.
